# EUROPEAN PATENT SPECIFICATION

(11) **EP 3 992 400 B1**
(45) Date of publication and mention of the grant of the patent: **02.08.2023**
(21) Application number: 21162271.7
(22) Date of filing: 12.03.2021
(51) Int. Cl.: E04H 4/12, C02F 1/68, C02F 1/76, C02F 103/42

(54) **SWIMMING POOL FILTER ELEMENT CAPABLE OF AUTOMATICALLY DOSING**
SCHWIMMBECKENFILTERELEMENT MIT AUTOMATISCHER DOSIERUNG
ÉLÉMENT DE FILTRE DE PISCINE CAPABLE DE DOSAGE AUTOMATIQUE

(30) Priority: 28.10.2020 CN 202011172603
(43) Date of publication of application: 04.05.2022
(73) Proprietor: Tianjin Yunda Industry And Trade Co., Ltd., Tianjin (CN)
(72) Inventor: WEI, Enyu, Tianjin, Tianjin (CN)
(74) Representative: Schmitt-Nilson Schraud Waibel Wohlfrom Patentanwälte Partnerschaft mbB

(56) References cited:
- EP-A2- 0 919 269
- US-A- 4 108 775
- US-A- 4 630 634
- US-A- 4 798 707

## Description

### TECHNICAL FIELD

The present disclosure relates to the technical field of swimming pool filter elements, in particular to a swimming pool filter element capable of automatically dosing.

### BACKGROUND

Filter element is special equipment in the filtering industry and is purification equipment generated for purifying connate fluid resource media, and existing filter elements are mainly applied to the filtering of liquid such as oil and water, the filtering of air and related industries. The filter element can remove solid particles in a fluid so as to protect normal work of equipment and cleanness of the fluid, after the fluid enters the filter element, impurities in the fluid are blocked, and the filtered clean fluid flows out through the filter element, so that the fluid is purified to a certain extent, the filter elements commonly used in swimming pools at present are all made of paper folding filter elements, and in the using process, the filter elements have the effect of intercepting hair, leaves and large-particle solid particles.

The patent application US 4,108,775A discloses a cartridge filter unit particularly adapted for use in a swimming pool water purification system because of its modular design. It includes a readily accessible filter body. By removing a cover, a core assembly including a solid entrapping device and an inexpensive, disposable filter cartridge contained therein may be easily withdrawn for cleaning or replacement without allowing solid pollutants collected by the filter to re-enter the system.

The patent application EP 0919 269 A2 disclosed a feeder insert apparatus for a tubular water filtration cartridge utilized in household point of use water filtration systems. The feeder insert allows a chemical to be fed into an incoming water supply at a controlled rate by employing a bypass system that allows a predetermined amount of incoming water to flow past the feed chemical without contacting the chemical. The amount of water in the bypass flow can also be manually adjusted through the use of two adjustment mechanisms, an adjustable ring of a rotatable end cap, located on the feeder insert.

The patent application US 4,798,707 A discloses a sailboat chlorine dispenser, which will dispense chlorine more evenly due to its shape as a sailboat. Wind will help move the dispenser around water in a pool. In a modification a sleeve containing the chlorine is rotated and activated by water movement in the pool.

The patent application US 4,630,634 A discloses a chlorine dispenser for spas. It includes a tubular container disposed within a sleeve having one closed end. The container and sleeve form a chamber for receiving the solid chlorine source. The sleeve contains apertures for providing access by water to the solid chlorine source. The sleeve is axially movable along the container, and a locknut engages the container to secure a given position of the sleeve. The container is attached to a foam-filled float, which ensures positive buoyancy of the dispenser in water. The sleeve is ballasted to ensure that the dispenser is vertically disposed in the water.

However, microorganisms in water cannot be killed, so that the microorganisms in the swimming pools are propagated, and the health of human bodies is damaged.

Therefore, designing a swimming pool filter element capable of automatically dosing becomes a technical problem to be solved urgently by those skilled in the art.

### SUMMARY

The technical problem to be solved by the present disclosure is to overcome the defects in the prior art, and to provide a swimming pool filter element capable of automatically dosing.

This technical problem is solved by the subject matter of the independent claim 1. Further embodiments are defined in the dependent claims.

A swimming pool filter element according to independent claim 1 which is capable of automatically dosing comprises a folding filter element and a doser filter element, the folding filter element comprises a filter membrane and end covers, the folding filter element is of a paper folding structure, the end covers comprise an upper end cover and a lower end cover, the upper end cover and the lower end cover are bonded to the filter membrane by hot melt welding, a wrench cover is arranged at the upper end of the upper end cover, the doser filter element comprises a doser end cover, a doser lining and a doser shell, flanges are arranged on the doser end cover and are in threaded connection with the doser lining, the doser lining is cylindrical, a plurality of groups of water inlet holes and convex flanges are arranged on the surface, the doser shell is arranged on the outer side of the doser lining, and a plurality of groups of through holes matched with the water inlet holes and grooves matched with the convex flanges are formed in the surface of the doser shell.

According to a first embodiment, the upper end cover and the lower end cover are of disc-shaped structures with a center hole.

According to a further embodiment, rectangular notches are formed beside the center hole of the upper end cover, a step is annularly arranged on the periphery of the upper end cover, and a lug boss is arranged between the step and the center hole.

According to a further embodiment, the wrench cover is of a disc-shaped structure, the center of the wrench cover is provided with an annular lug boss and convex flanges, and the outer side of the wrench cover is provided with a locking handle.

According to a further embodiment, L-shaped grooves are formed in the annular lug boss.

The swimming pool filter element has the beneficial effects that the doser filter element is added into the folding filter element, so that a water flow needing to be filtered firstly passes through the filter membrane of the folding filter element, solid large-particle impurities are filtered out, then the water flow enters the doser filter element and makes contact with sterilization tablets placed in the doser filter element, the tablets are melted to form liquid medicine, and finally the liquid medicine is discharged into a swimming pool, so that bacteria in the swimming pool are killed, and a human body is prevented from being damaged by the bacteria.

### BRIEF DESCRIPTION OF THE DRAWINGS

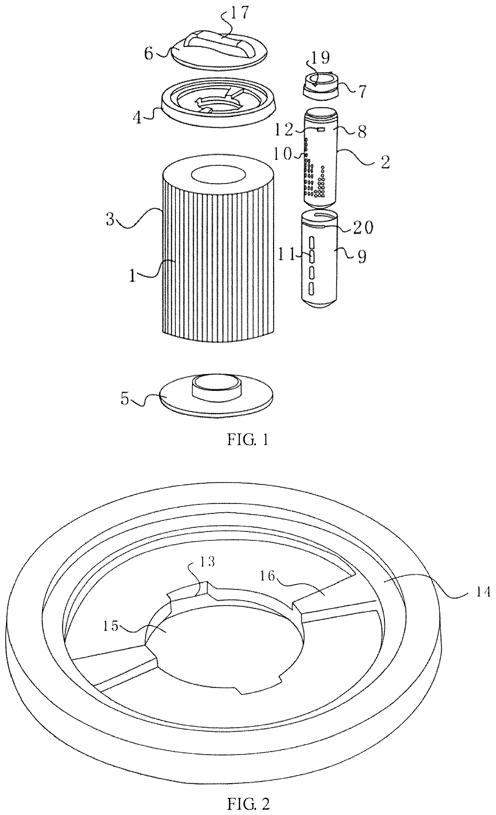

FIG. 1 illustrates an explosive view of an embodiment of the present disclosure.
FIG. 2 illustrates a structural perspective view of an upper end cover in the embodiment of the present disclosure.

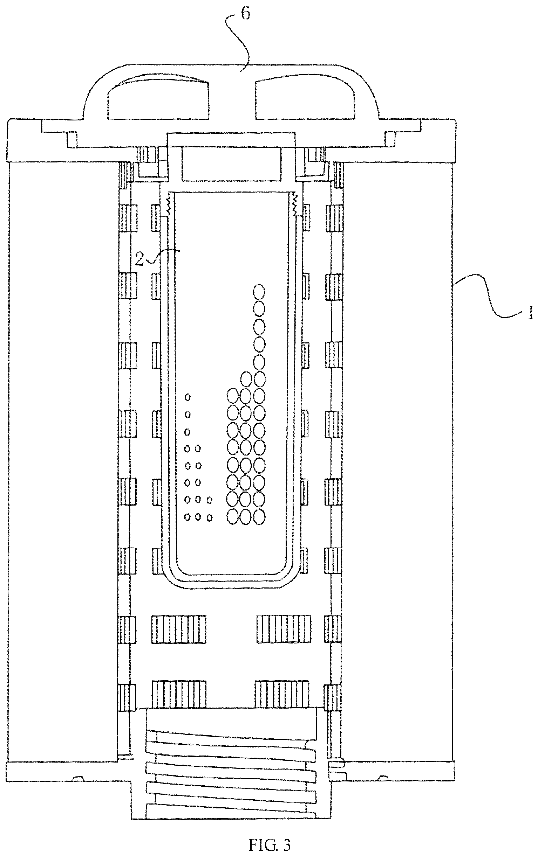

FIG. 3 illustrates an internal structural view of the embodiment of the present disclosure.

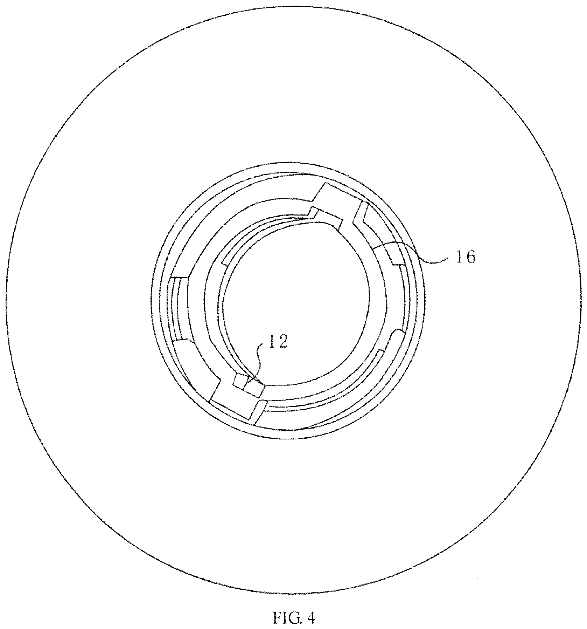

FIG. 4 illustrates a structural view of convex flanges and an annular lug boss in the embodiment of the present disclosure.

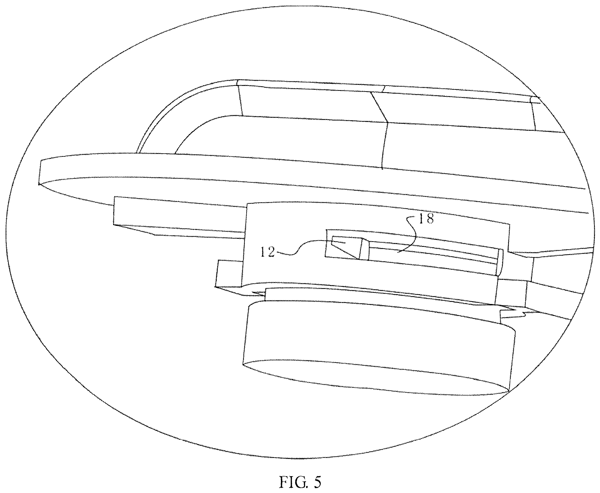

FIG. 5 illustrates a structural view of convex flanges and L-shaped grooves in the embodiment of the present disclosure.

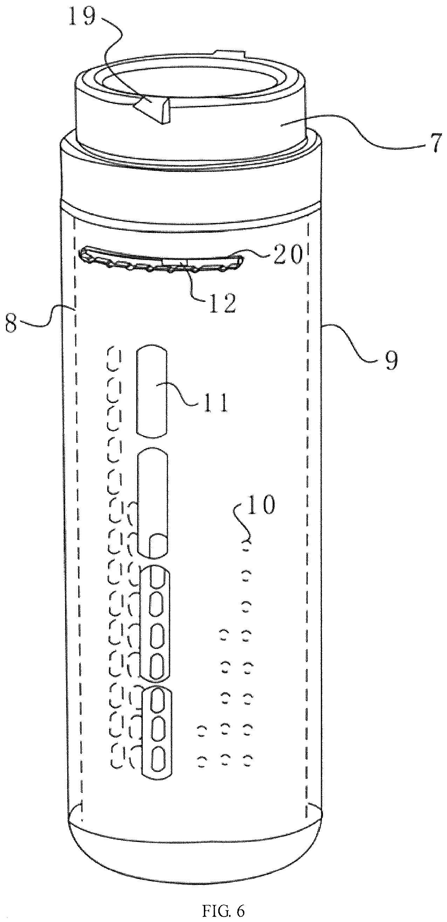

FIG. 6 illustrates a structural view of a doser filter element in the embodiment of the present disclosure.

Reference signs: 1, folding filter element; 2, doser filter element; 3, filter membrane; 4, upper end cover; 5, lower end cover; 6, wrench cover; 7, doser end cover; 8, doser lining; 9, doser shell; 10, water inlet hole; 11, through hole; 12, convex flange; 13, rectangular notch; 13, step; 15, center hole; 16, annular lug boss; 17, locking handle; 18, L-shaped groove; 19, flange; and 20, groove.

### DETAILED DESCRIPTION

For the purpose that those skilled in the art understand the technical scheme of the present disclosure better, the following further illustrates the present disclosure with reference to the attached figures and optimal embodiments.

As shown in figures, the present disclose provides a swimming pool filter element capable of automatically dosing. The swimming pool filter element comprises a folding filter element 1 and a doser filter element 2, the folding filter element 1 comprises a filter membrane 3 and end covers, the folding filter element 1 is of a paper folding structure, the end covers comprise an upper end cover 4 and a lower end cover 5, the upper end cover and the lower end cover are bonded to the filter membrane 3 by hot melt welding, a wrench cover 6 is arranged at the upper end of the upper end cover 5, the doser filter element 2 comprises a doser end cover 7, a doser lining 8 and a doser shell 9, flanges 19 are arranged on the doser end cover 7 and are in threaded connection with the doser lining 8, the doser lining 8 is cylindrical, sterilization tablets are placed in the doser filter element 2, a plurality of groups of water inlet holes 10 and convex flanges 12 are arranged on the surface, the doser shell 9 is arranged on the outer side of the doser filter element 2, a plurality of groups of through holes 11 matched with the water inlet holes 10 and grooves 20 matched with the convex flanges 12 are formed in the surface of the doser shell 9, the convex flange 12 of the doser lining 8 are used for being matched with the grooves 20 of the doser shell 9 so as to achieve position positioning of the doser shell 9, and under the combined action of the water inlet holes 10 and the through holes 11, the water outlet area is changed, and the release of dosage is controlled.

The working principle of the swimming pool filter element is that a water flow needing to be filtered firstly passes through the filter membrane 3 of the folding filter element 1, solid large-particle impurities are filtered out, then the water flow enters the doser filter element 2 and makes contact with the sterilization tablets placed in the doser filter element 2, the tablets are melted to form liquid medicine, and finally the liquid medicine is discharged into a swimming pool, so that bacteria in the swimming pool are killed, and a human body is prevented from being damaged by the bacteria.

According to the embodiment, preferably, the upper end cover and the lower end cover are of disc-shaped structures 15 with a center hole.

According to the embodiment, preferably, rectangular notches 13 are formed beside the center hole of the upper end cover 4, a step 14 is annularly arranged on the periphery of the upper end cover, and a lug boss 16 is arranged between the step 14 and the center hole 15.

According to the embodiment, preferably, the wrench cover 6 is of a disc-shaped structure, the center of the wrench cover 6 is provided with an annular lug boss 16 and convex flanges 12, and the outer side of the wrench cover 6 is provided with a locking handle 17. The annular boss 16 is attached to the boundary of the lug boss 16 of the upper end cover 4, positioning of the wrench cover 6 is guaranteed, after the convex flanges 12 are screwed into the rectangular notches 13, the wrench cover 6 is locked and positioned, and when a handle cover is installed on the locking handle 17, rotating force is applied with fingers.

According to the embodiment, preferably, L-shaped grooves 18 are formed in the annular lug boss 16 and are used for the flanges 19 of the upper end cover 4 to be embedded.

The swimming pool filter element has the beneficial effects that the doser filter element is added into the folding filter element 1, so that a water flow needing to be filtered firstly passes through the filter membrane 3 of the folding filter element 1, solid large-particle impurities are filtered out, then the water flow enters the doser filter element 2 and makes contact with sterilization tablets placed in the doser filter element 2, the tablets are melted to form liquid medicine, and finally the liquid medicine is discharged into a swimming pool, so that bacteria in the swimming pool are killed, and a human body is prevented from being damaged by the bacteria.

The foregoing descriptions are merely example implementations of the present disclosure. It should be noted that a person of ordinary skill in the art may make several improvements or polishing without departing from the principle of the present disclosure and the improvements or polishing shall fall within the protection scope of the present disclosure, all within the scope of the appended claims.

## Claims

1. A swimming pool filter element capable of automatically dosing, comprising a folding filter element (1) and a doser filter element (2), wherein the folding filter (1) element comprises a filter membrane (3) and end covers, the folding filter element (1) is of a paper folding structure, the end covers comprise an upper end cover (4) and a lower end cover (5), **characterized in that**:
the upper end cover (4) and the lower end cover (5) are bonded to the filter membrane (3) by hot melt welding, a wrench cover (6) is arranged at an upper end of the upper end cover (5), the doser filter element (2) comprises a doser end cover (7), a doser lining (8) and a doser shell (9), flanges (19) are arranged on the doser end cover (7) and are in threaded connection with the doser lining (8), the doser lining (8) is cylindrical, a plurality of groups of water inlet holes (10) and convex flanges (12) are arranged on a surface of the doser lining (8), the doser shell (9) is arranged on an outer side of the doser lining (8), and a plurality of groups of through holes (11) matched with the water inlet holes (10) and grooves (20) matched with the convex flanges are formed in a surface of the doser shell (9).

2. The swimming pool filter element capable of automatically dosing according to claim 1, **characterized in that** the upper end cover (4) and the lower end cover (5) are of disc-shaped structures with a center hole (15).

3. The swimming pool filter element capable of automatically dosing according to claim 2, **characterized in that**: rectangular notches (13) are formed beside the center hole (15) of the upper end cover (4), a step (14) is annularly arranged on a periphery of the upper end cover (4), and a lug boss (16) is arranged between the step (14) and the center hole (15).

4. The swimming pool filter element capable of automatically dosing according to any of the preceding claims, **characterized in that**: the wrench cover (6) is of a disc-shaped structure, a center of the wrench cover (6) is provided with an annular lug boss (16) and convex flanges (12), and an outer side of the wrench cover (6) is provided with a locking handle (17).

5. The swimming pool filter element capable of automatically dosing according to claim 4, **characterized in that** L-shaped grooves (18) are formed in the annular lug boss (16).

## Patentansprüche

1. Schwimmbecken-Filterelement mit automatischer Dosierung, aufweisend ein Falt-Filterelement (1) und ein Dosierer-Filterelement (2), wobei das Falt-Filterelement (1) eine Filtermembran (3) und Endabdeckungen aufweist, das Falt-Filterelement (1) eine Papierfaltstruktur besitzt, und die Endabdeckungen eine obere Endabdeckung (4) und eine untere Endabdeckung (5) aufweisen,
**dadurch gekennzeichnet, dass** die obere Endabdeckung (4) und die untere Endabdeckung (5) mit der Filtermembran (3) durch Schmelzschweißen verbunden sind, eine Schraubenschlüssel-Abdeckung (6) an einem oberen Ende der oberen Endabdeckung (5) angeordnet ist, das Dosierer-Filterelement (2) eine Dosierer-Endabdeckung (7), eine Dosierer-Verkleidung (8) und einen Dosierer-Mantel (9) aufweist, Flansche (19) an der Dosierer-Endabdeckung (7) angeordnet sind und mit der Dosierer-Verkleidung (8) in gewindemäßiger Verbindung stehen, die Dosierer-Verkleidung (8) zylindrisch ist, eine Mehrzahl von Gruppen von Wassereinlassöffnungen (10) und konvexe Flansche (12) auf einer Oberfläche der Dosierer-Verkleidung (8) angeordnet sind, der Dosierer-Mantel (9) an einer Außenseite der Dosierer-Verkleidung (8) angeordnet ist und eine Mehrzahl von Gruppen von Durchgangsöffnungen (11), die in Übereinstimmung mit den Wassereinlassöffnungen (10) vorgesehen sind, und Nuten (20), die in Übereinstimmung mit den konvexen Flanschen vorgesehen sind, in einer Oberfläche des Dosierer-Mantels (9) gebildet sind.

2. Schwimmbecken-Filterelement mit automatischer Dosierung nach Anspruch 1,
**dadurch gekennzeichnet, dass** die obere Endabdeckung (4) und die untere Endabdeckung (5) scheibenförmige Strukturen mit einer zentralen Öffnung (15) sind.

3. Schwimmbecken-Filterelement mit automatischer Dosierung nach Anspruch 2,
**dadurch gekennzeichnet, dass** rechteckige Aussparungen (13) neben der zentralen Öffnung (15) der oberen Endabdeckung (4) gebildet sind, dass an einem Umfang der oberen Endabdeckung (4) eine Stufe (14) ringförmig angeordnet ist und dass zwischen der Stufe (14) und der zentralen Öffnung (15) ein Ansatzvorsprung (16) angeordnet ist.

4. Schwimmbecken-Filterelement mit automatischer Dosierung nach einem der vorhergehenden Ansprüche,
**dadurch gekennzeichnet, dass** die Schraubenschlüssel-Abdeckung (6) eine scheibenförmige Struktur aufweist, dass ein Zentrum der Schraubenschlüssel-Abdeckung (6) mit einem ringförmigen Ansatzvorsprung (16) und konvexen Flanschen (12) versehen ist, und dass eine Außenseite der Schraubenschlüssel-Abdeckung (6) mit einer Verriegelungshandhabe (17) versehen ist.

5. Schwimmbecken-Filterelement mit automatischer Dosierung nach Anspruch 4,
**dadurch gekennzeichnet, dass** in dem ringförmigen Ansatzvorsprung (16) L-förmige Nuten (18) gebildet sind.

## Revendications

1. Elément filtrant pour piscine, capable d'effectuer un dosage automatique, comprenant un élément filtrant pliable (1) et un élément filtrant doseur (2), dans lequel l'élément filtrant pliable (1) comprend une membrane filtrante (3) et des couvercles d'extrémité, l'élément filtrant pliable (1) a une structure en papier plié, les couvercles d'extrémité comprennent un couvercle d'extrémité supérieure (4) et un couvercle d'extrémité inférieure (5), **caractérisé en ce que** :
le couvercle d'extrémité supérieure (4) et le couvercle d'extrémité inférieure (5) sont collés à la membrane filtrante (3) par soudage à chaud, un couvercle de serrage (6) est agencé à une extrémité supérieure du couvercle d'extrémité supérieure (5), l'élément filtrant doseur (2) comprend un couvercle d'extrémité de doseur (7), une paroi de doseur (8) et une coque de doseur (9), des brides (19) sont agencées sur le couvercle d'extrémité de doseur (7) et sont en connexion filaire avec la paroi de doseur (8), la paroi de doseur (8) est cylindrique, une pluralité de trous d'entrée d'eau (10) et de brides convexes (12) sont agencés sur une surface de la paroi de doseur (8), la coque de doseur (9) est agencée sur une face extérieure de la paroi de doseur (8), et une pluralité de trous traversants (11) correspondant aux trous d'entrée d'eau (10) et de rainures (20) correspondant aux brides convexes sont formés sur une surface de la coque de doseur (9).

2. Elément filtrant pour piscine, capable d'effectuer un dosage automatique, selon la revendication 1, **caractérisé en ce que** le couvercle d'extrémité supérieure (4) et le couvercle d'extrémité inférieure (5) ont une structure en forme de disque avec un trou central (15).

3. Elément filtrant pour piscine, capable d'effectuer un dosage automatique, selon la revendication 2, **caractérisé en ce que** : des encoches rectangulaires (13) sont formées à côté du trou central (15) du couvercle d'extrémité supérieure (4), un cran (14) est agencé annulairement sur la périphérie du couvercle d'extrémité supérieure (4), et un raccord à pattes (16) est agencé entre le cran (14) et le trou central (15).

4. Elément filtrant pour piscine, capable d'effectuer un dosage automatique, selon une des revendications précédentes, **caractérisé en ce que** :
le couvercle de serrage (6) a une structure en forme de disque, un centre du couvercle de serrage (6) est pourvu d'un raccord annulaire à pattes (16) et de brides convexes (12), et une face extérieure du couvercle de serrage (6) est pourvue d'une poignée de verrouillage (17).

5. Elément filtrant pour piscine, capable d'effectuer un dosage automatique, selon la revendication 4, **caractérisé en ce que** des rainures en L (18) sont formées sur le raccord annulaire à pattes (16).
